# EUROPEAN PATENT APPLICATION

(11) **EP 3 045 776 A1**
(43) Date of publication of application: **20.07.2016**
(21) Application number: 15150977.5
(22) Date of filing: 13.01.2015
(51) Int. Cl.: F16H 48/30, F16H 48/34, E05B 81/40, E05B 81/50, F16H 25/20

(54) **Failsafe electrical actuator for a differential locking system**

(71) Applicant: Tollo Linear AB, 291 09 Kristianstad (SE)
(72) Inventor: Täljsten, David, 291 09 Kristianstad (SE); Gnebner, Peter, 291 09 Kristianstad (SE); Persson, Håkan, 291 09 Kristianstad (SE)
(74) Representative: Awapatent AB

(57) **Abstract**

The present invention relates to an electrical actuator (1) for a differential locking system, wherein the electrical actuator comprises: an electrical motor (3); a leadscrew (5) adapted to be rotated by the electrical motor (3); a nut (10) mounted on the leadscrew (5) and adapted to be moved linearly along the leadscrew (5) between a first position (A) where said differential locking system is disengaged and a second position (B) where said differential locking system is engaged; a wormspring (11) mounted on the leadscrew (5) and adapted to be loaded when the nut (10) is moved from the first position (A) to the second position (B); and a leadscrew locking arrangement (15) adapted to prevent rotation of the leadscrew (5) when an electrical current is supplied to the leadscrew locking arrangement (15) and the nut is in the second position (B), wherein the leadscrew locking arrangement (15) is further adapted to allow rotation of the leadscrew (5) in case of loss of the supplied electrical current, in which case the wormspring (11) unloads and rotates the leadscrew (5) such that the nut (10) is returned from the second position (B) to the first position (A).

## Description

### Field of the invention

The present invention relates to an electrical actuator for a differential locking system. Such an actuator is used to engage or disengage the differential locking system.

### Background of the invention

In automobiles and other vehicles with wheels, a differential (or differential gear) allows the outer drive wheel to rotate faster than the inner drive wheel during a turn. Some differentials may be locked using a differential locking system. When the differential is locked, both wheels on an axle are "locked" together as if on a common shaft. The locking may be automatic or selective. In the latter case, the driver can manually lock and unlock the differential.

A differential locking system may e.g. by engaged (or enabled or actuated) using compressed air (pneumatics), as for example disclosed in US2011/0136611 A1. US2011/0136611 A1 discloses a differential lock mechanism which includes a shift member and a shift collar that is moveable by the shift member between an engaged position with a differential assembly and a disengaged position. A pneumatic control provides a first pneumatic signal to move the shift collar into the engaged position and provides a second pneumatic signal to return the shift collar to the disengaged position. The differential lock in US2011/0136611 A1 may further include a resilient member biased to return said shift collar to said disengaged position in cooperation with said second pneumatic signal. In one example, the resilient member comprises a single coil spring.

Alternatively, the differential may be locked using an electromagnetic mechanism, as in ELocker provided by Eaton. In ELocker, if an obstacle is encountered, driver turns on a dash switch to activate the unit. The electromagnetic mechanism then locks, capturing 100% of the available torque and sending it equally to both wheels. A second flip of the switch deactivates the unit to resume normal driving.

### General disclosure of the invention

It is an object of the present invention to provide an improved actuator for a differential locking system. Furthermore, in case the actuator is electrical, it may be desirable that the actuator automatically disengages the differential locking system in case electrical power to the actuator is lost, for safety reasons. It is hence a particular object of the present invention to provide an actuator which is electrical and which automatically may disengage the differential locking system in case electrical power to the actuator is lost.

According to a first aspect of the invention, these and other objects are achieved by an actuator for a differential locking system, wherein the actuator comprises: an electrical motor; a leadscrew adapted to be rotated by the electrical motor; a nut mounted on the leadscrew and adapted to be moved linearly along the leadscrew between a first position where the differential locking system is disengaged and a second position where the differential locking system is engaged; a wormspring mounted on the leadscrew and adapted to be loaded when the nut is moved from the first position to the second position; and a leadscrew locking arrangement adapted to prevent rotation of the leadscrew when an electrical current is supplied to the leadscrew locking arrangement and the nut is in the second position, wherein the leadscrew locking arrangement is further adapted to allow rotation of the leadscrew in case of loss of the supplied electrical current, in which case the wormspring unloads and rotates the leadscrew such that the nut is returned from the second position to the first position.

In the present invention, an electrical actuator is used to engage and disengage the differential locking system. This makes the actuator electrically controllable, and it may also save weight. The present invention is further based on the realization that by providing a wormspring which is loaded when the differential locking system is engaged in combination with a leadscrew locking arrangement which may lock rotation of the leadscrew only when electrical current is supplied to it, the differential locking system may automatically be disengaged without use of electrical power, in case power to the actuator is lost when the differential locking system in engaged (i.e. when a corresponding differential is locked). The actuator is therefore "failsafe", in that it will disengage the differential locking system in case of power loss. This may improve the safety of e.g. a vehicle employing the present actuator and differential locking system. It is noted that the expression wormspring (or worm spring) is here intended to encompass any spring member that may store torque during rotation of the leadscrew in one direction, and deliver this rotational energy to thereby rotate the leadscrew in the counter direction.

The leadscrew locking arrangement may comprise a first friction plate mounted to the leadscrew, a second friction plate which is stationary with respect to the leadscrew, and an electromagnet activatable by the electrical current to bring the first and second friction plates in frictional contact with each other. This provides for a robust leadscrew locking arrangement. However, several other designs may be contemplated for the leadscrew locking arrangement.

The first friction plate may be mounted at one end of the leadscrew.

The electromagnet may be arranged coaxially to the leadscrew.

The actuator may further comprise a pin fixed with the nut, which pin is substantially perpendicular to said leadscrew. The pin may be adapted to engage with the differential locking system.

The actuator may further comprise a gear arrangement between the electrical motor and the leadscrew. The gear arrangement may for example be a gear box. The gear arrangement or gearbox may alter the rotation speed of the leadscrew compared to that of the electrical motor.

According to a second aspect of the invention, there is provided a differential locking system comprising an electrical actuator according the first aspect of the invention for engaging or disengaging the differential locking system. This aspect may exhibit the same or similar features and technical effects as the first aspect.

According to a third aspect of the invention, there is provided a vehicle comprising a differential gear and a differential locking system according to the second aspect of the invention. This aspect may exhibit the same or similar features and technical effects as the first and second aspects. The vehicle may for example be a car.

### Brief description of the drawings

The present invention will be described in more detail with reference to the appended drawings, showing currently preferred embodiments of the invention.
Figure 1 is a schematic illustration of an actuator mounted on a differential locking system.
Figure 2 is a side cross section view of an actuator according to an embodiment of the present invention.
Figure 3 is a partly exploded perspective view of the actuator in figure 2.
Figure 4 is a flow chart illustrating the operation of the actuator in figures 2-3.

### Detailed description of preferred embodiments

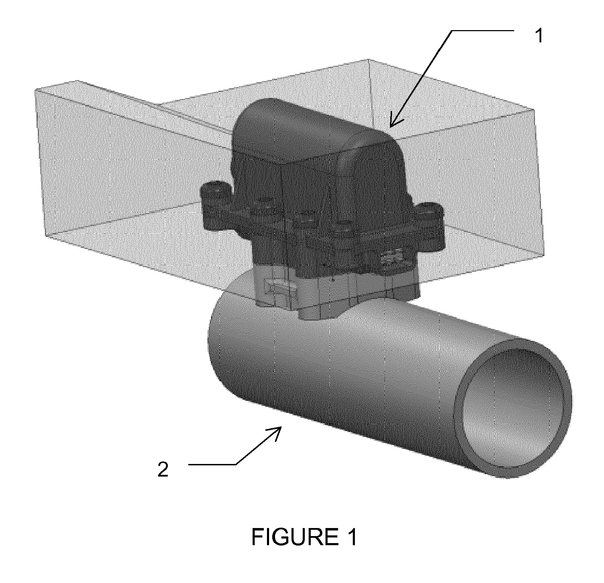

Figure 1 schematically shows an actuator 1 mounted on a differential locking system 2 coupled to a differential gear (not shown) of a vehicle or other machinery. The actuator is arranged to move the differential locking system 2 between a disengaged state, where the differential gear is operational, and an engaged state where the differential gear is locked.

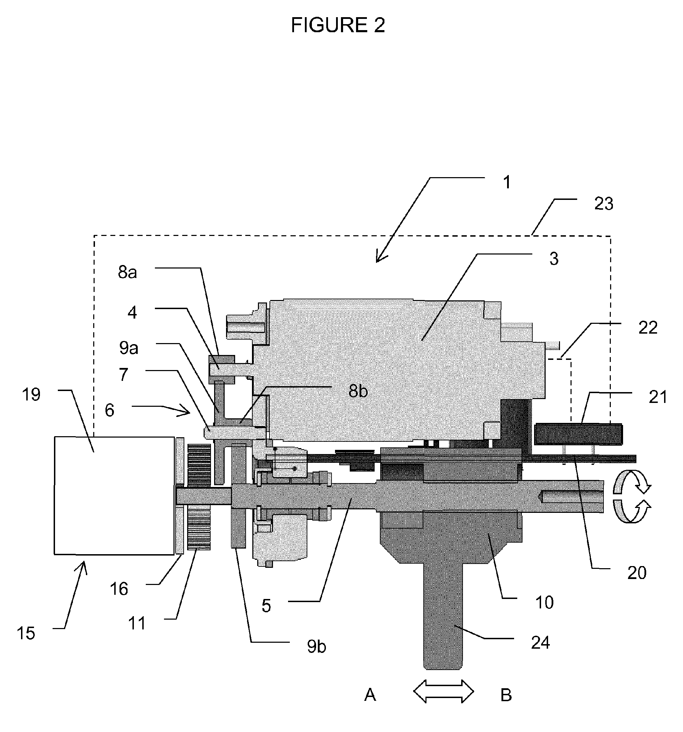

An electrical actuator 1 according to an embodiment of the present invention is shown in more detail in figures 2-3. The actuator 1 comprises an double action electric motor 3 with a drive shaft 4. The drive shaft 4 is mechanically coupled to a threaded leadscrew 5 via a gear arrangement 6. In the illustrated example, the gear arrangement 6 is a gear box including one intermediate axis 7, two smaller gear wheels 8a, 8b and two larger gear wheels 9a, 9b. The gear box 6 here provides a double reduction of rotation speed from the shaft 4 to the leadscrew 5.

A threaded nut 10 is arranged on the leadscrew 5, so as to be movable along the leadscrew 5 during rotation of the leadscrew 5. (It is noted that any reference to "rotation" of the leadscrew 5 is intended to indicate rotation around its longitudinal axis, indicated in figure 2 by arrows.) The leadscrew 5 and nut 10 thus provide a transformation of the rotational motion of the motor shaft 3 to a translating motion of the nut 10, providing a motion of the nut 10 from a first position A to a second position B.

The nut 10 here has a pin 24 extending perpendicularly from the leadscrew 5, which pin is adapted to engage with the differential locking system 2.

The leadscrew 5 may be made of metal, while the nut 10 may be made of a suitable polymer. Such a combination of materials provides satisfactory durability and friction. By way of example, the threading of the leadscrew 5 and nut 10 may have a pitch corresponding to around 1.5 mm translation per complete turn. Further, the total distance between the first position and the second position may be in the order of 10 mm, e.g. around 12 mm.

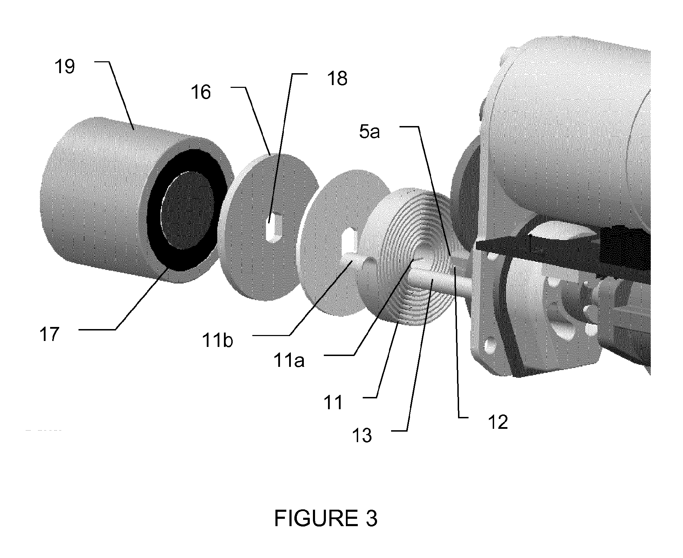

As shown in more detail in figure 3, one end of worm spring 11 (sometimes referred to as a clock spring) is rotationally fixed near one end 5a of the leadscrew 5. In the illustrated embodiment, the rotational fixation is ensured by inserting the flat central end 11 a of the worm spring 11 into a slot 12 in the leadscrew 5. The other end of the worm spring 11, here the outer end 11 b, abuts an abutment 13, arranged to prevent rotation of this end of the work spring 11 around the leadscrew 5. It will be understood that this mounting of the worm spring 11 will result in that the worm spring is tensioned when the leadscrew 5 is rotated relative the abutment 13.

By way of example, the worm spring 11 may have a spring force of 250 N, and be adapted to store a torque in the order of 1 Nm.

It is noted that the expression worm spring is here intended to encompass any spring member that may store torque during rotation of the leadscrew 5 in one direction, and deliver this rotational energy to thereby rotate the leadscrew 5 in the counter direction. The traditional example of a worm spring is a "clock spring", as illustrated in figure 3. However, also other spring members may be envisaged, such as a coil spring connected to a flexible member arranged to be rolled up in the leadscrew 5.

Again with reference to figure 2, the actuator further includes a leadscrew locking arrangement 15. The arrangement 15 here includes a friction plate 16 rotationally fixed to the leadscrew 5 and an electromagnet 19 which is stationary with respect to the leadscrew. When provided with electrical power the electromagnet 19 generates an attraction force F acting on the friction plate 16, forcing it into contact with a friction surface 17 of the magnet 19, to thereby prevent rotation of the leadscrew 5.

In the illustrated example, friction plate 16 is arranged in the end 5a of the leadscrew 5, axially outside the worm spring 11, and the electromagnet 19 is arranged axially outside the friction plate 16. Alternatively, the friction plate, and the entire leadscrew locking arrangement 15, may be provided in the other end of the leadscrew 5. The electromagnet 19 is shown coaxial with the leadscrew 5, but may alternatively be located off-axis. The rotational fixation is here provided by a non circular hole 18 in the friction plate 16, and a corresponding grading of the leadscrew 5. The friction plate 16 may be formed by a disc of a magnetic material, e.g. metal, coated with a high friction material such as rubber or a suitable polymer.

It is noted that several alternative designs may be contemplated for the leadscrew locking arrangement 15. The most important property of the locking arrangement is that an electrical power is required to prevent rotation of the leadscrew 5, so that absence of such electrical power will allow free rotation of the leadscrew 5. Instead of friction plates the locking arrangement may include e.g. a suitable locking pin engaging the leadscrew 5, or a clamping device for clamping the leadscrew 5. Yet another option is to design the locking arrangement in a similar fashion as a disc brake, and include a disc fixed to the leadscrew and a clamping device arranged to clamp the disc when supplied with electrical power.

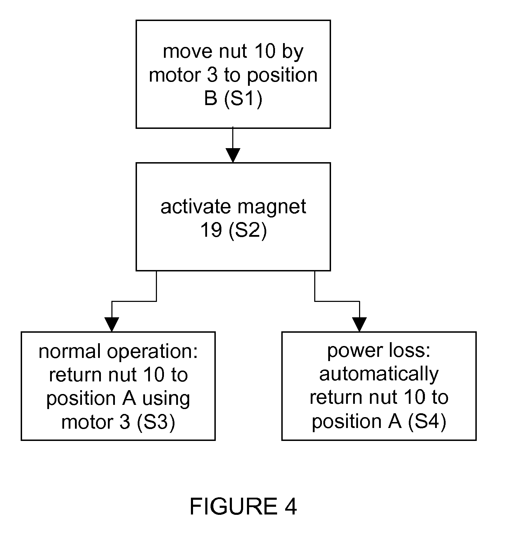

Returning to figure 2, the actuator 1 further comprises a printed circuit board (PCB) 20 including circuitry 21 for controlling the operation of the motor 2 and electromagnet 19. The circuitry 21 is connected to the motor 2 via an electric lead 22, and to the electromagnet 19 via an electric lead 23. The operation of the circuitry 21 is outlined in the flow chart in figure 4 and described in the following.

First, in step S1, the motor 2 is operated to rotate the leadscrew 5 to move the nut 10 from its first position A into its second position B. In this position, the differential locking system is engaged and the differential gear (not shown) is locked. During the rotation of the leadscrew 5 in step S1, the worm spring 11 is loaded, i.e. torque is stored by tensioning the worm spring 11.

In step S2, the electromagnet 19 is provided with electrical power, thereby generating the attraction force F to bring the friction plate 16 into frictional contact with the surface 17, and maintain this contact.

In step S3, the electromagnet is disconnected from the electrical power, thereby releasing the friction plate 16 and allowing the leadscrew 5 to rotate freely. Further, the motor 3 is operated to rotate the leadscrew 5 to move the nut 10 from its second position B into its first position A. In this position, the differential locking system is disengaged and the differential gear (not shown) is operational.

If power for any reason is lost with the nut 10 in its second position B, the motor is deactivated so that the motor shaft 4 provides no or very limited torque to the leadscrew 5 (step S4). Further, the electromagnet 19 is deactivated, to release the friction plate 16 thereby allowing the leadscrew 5 to rotate freely. The tensioned worm spring 11 will then immediately unload, and return the nut 10 to its first position A. The actuator will thus always return to position A in case of power loss.

If the motor 3 has an internal torque which cannot be disregarded, the gear box may further be adapted to mechanically disconnect the motor shaft 4 from the leadscrew 5. This may be accomplished by means of a suitable electromagnetic switch.

The person skilled in the art realizes that the present invention by no means is limited to the preferred embodiments described above. On the contrary, many modifications and variations are possible within the scope of the appended claims. For example, and as mentioned above, the details of the worm spring 11 and the leadscrew locking arrangement 15 may be different as long as the desired functionality is provided. Further, a different gear box 6 may be used, to provide a desired transformation of rotational speed. Also, the size, shape and relative orientation of various mechanical components may be different than that illustrated in the drawings.

## Claims

1. An electrical actuator (1) for a differential locking system, wherein the electrical actuator comprises:
an electrical motor (3);
a leadscrew (5) adapted to be rotated by the electrical motor (3);
a nut (10) mounted on the leadscrew (5) and adapted to be moved linearly along the leadscrew (5) between a first position (A) where said differential locking system is disengaged and a second position (B) where said differential locking system is engaged;
a wormspring (11) mounted on the leadscrew (5) and adapted to be loaded when the nut (10) is moved from the first position (A) to the second position (B); and
a leadscrew locking arrangement (15) adapted to prevent rotation of the leadscrew (5) when an electrical current is supplied to the leadscrew locking arrangement (15) and the nut is in the second position (B),
wherein the leadscrew locking arrangement (15) is further adapted to allow rotation of the leadscrew (5) in case of loss of the supplied electrical current, in which case the wormspring (11) unloads and rotates the leadscrew (5) such that the nut (10) is returned from the second position (B) to the first position (A).

2. An electrical actuator according to claim 1, wherein the leadscrew locking arrangement (15) comprises a friction plate (16) mounted to the leadscrew (5), a friction surface (17) which is stationary with respect to the leadscrew, and an electromagnet (19) activatable by said electrical current to bring the friction plate (16) into frictional contact with the friction surface (17).

3. An electrical actuator according to claim 2, wherein the friction plate (16) is mounted at one end (5a) of the leadscrew (5).

4. An electrical actuator according to claim 3, wherein the friction plate (16) is mounted axially outside the worm spring (11).

5. An electrical actuator according to one of claims 2 - 4, wherein the electromagnet (19) is arranged coaxially to the leadscrew.

6. An electrical actuator according to any preceding claim, further comprising a pin fixed with said nut, which pin is substantially perpendicular to said leadscrew.

7. An electrical actuator according to any preceding claim, further comprising a gear arrangement (6) between the electrical motor and the leadscrew.

8. A differential locking system comprising an electrical actuator according to any preceding claim for engaging or disengaging said differential locking system.

9. A vehicle comprising a differential gear and a differential locking system according to claim 8.
